# EUROPÄISCHE PATENTSCHRIFT

(11) **EP 2 799 903 B1**
(45) Veröffentlichungstag und Bekanntmachung des Hinweises auf die Patenterteilung: **06.09.2017**
(21) Anmeldenummer: 14165812.0
(22) Anmeldetag: 24.04.2014
(51) Int. Cl.: G01S 13/92, G08G 1/054, G01S 13/86, H04N 7/18

(54) **Verfahren zur Erfassung von Geschwindigkeitsverstößen mit restriktiver Datenspeicherung**
Method for detecting speeding offences with restrictive data storage
Procédé de détection d'excès de vitesse avec un stockage de données restrictif

(30) Priorität: 30.04.2013 DE 102013104425
(43) Veröffentlichungstag der Anmeldung: 05.11.2014
(73) Patentinhaber: Jenoptik Robot GmbH, 40789 Monheim (DE)
(72) Erfinder: Lehning, Michael, 31137 Hildesheim (DE); Ackers, Judith, 42107 Wuppertal (DE); Blanke, Oliver, 40223 Düsseldorf (DE); Heiner, Andreas, 38729 Lutter (DE)
(74) Vertreter: Schaller, Renate

(56) Entgegenhaltungen:
- EP-A2- 0 188 694
- US-A1- 2011 123 068
- US-A1- 2011 234 749
- US-A1- 2013 038 681
- US-B1- 6 502 053
- US-B1- 8 294 595

## Beschreibung

Moderne, mehrzielfähige Radareinrichtungen sind in der Lage, mehrere zeitgleich durch einen Messbereich der Radareinrichtung fahrende Fahrzeuge gleichzeitig zu verfolgen und messtechnisch zu erfassen. Dabei werden mit einer vorgegebenen Messfrequenz zu einer Vielzahl von Messzeitpunkten jeweils Messdaten erhalten, aus denen sich Objektdaten ableiten lassen, die über die Messdauer als Objekttrackingdaten ein sich durch den Messbereich bewegendes Model mit einer zugehörigen Geschwindigkeit beschreiben. Trotz der hohen Messgüte, die bei dem Einsatz solcher Radareinrichtungen erreicht wird, ist nicht auszuschließen, dass es aufgrund von Verdeckungseffekten oder Knickstrahleffekten zu Fehlzuordnungen der gemessenen Geschwindigkeiten zu den erfassten Fahrzeugen oder Falschmessungen kommen kann, selbst wenn gemessene Geschwindigkeiten, die vorerst als vermutete Geschwindigkeiten gelten, erst nach mehrfacher Erfassung als bestätigt gelten.
Um gesicherte Messergebnisse zu erhalten, werden deshalb gemäß dem Stand der Technik die Fahrzeuge zeitgleich mit einem von der Radarmessung unabhängigen Messverfahren erfasst.

Mit einer Kamera werden mit einer vorgegebenen Bildfolgefrequenz digitalisierte Bilder eines Objektfeldes und damit Objektfelddaten erzeugt. Von den Objektfelddaten werden wenigstens die Bilddaten eines sich bewegenden Objektes, z. B. eines Fahrzeuges (s. oben), abgespeichert. Das heißt, es werden wenigstens die Pixelkoordinaten der von der Abbildung eines bewegten Objektes beaufschlagten Pixel eines Kameraempfängers, z. B. einer CCD-Matrix, bezogen auf ein Kamerakoordinatensystem, jeweils einem Aufnahmezeitpunkt, dem Zeitpunkt an dem die CCD-Matrix ausgelesen wird, zugeordnet, wenigstens temporär, abgespeichert. Die über die Aufnahmedauer erfassten Bilddaten eines Objektes, die auch die Positionsänderungen des abgebildeten Objektes innerhalb der Bildebene (Trajektorie im Bild), während das Objekt durch das Objektfeld der Kamera fährt, umfassen, werden als Bildtrackingdaten zusammengefasst.

Aus der Kenntnis der Ausrichtung der optischen Achse der Kamera (nachfolgend Kameraachse) zum Fahrbahnrand und deren Abbildungsmaßstab lassen sich die Bildtrackingdaten in Objekttrackingdaten umrechnen und in Verbindung mit den Abständen der Aufnahmezeitpunkte kann die Geschwindigkeit des abgebildeten Fahrzeuges abgeleitet werden. Letzteres ist jedoch nicht möglich, wenn keine Positionsänderung des abgebildeten Objektes auflösbar ist, was insbesondere dann vorkommt, wenn das Objekt noch weit entfernt ist und in Richtung der Kameraachse fährt. Nachteilig ist auch die Abhängigkeit der Messqualität von der Belichtung der abgebildeten Objekte, d. h. Kameras sind nicht unabhängig von Witterung und Tageszeit einsetzbar.

Aus der US2013/0038681 A1 ist ein Verfahren bekannt, bei dem Fahrzeuge zur Ermittlung der Geschwindigkeiten und Positionen und zur automatischen Ermittlung von Straßenverkehrsverstößen mit einer Radareinrichtung und einer Kamera erfasst werden. Aus der DE 10 2010 012 811 A1 ist ein von der Anmelderin entwickeltes Verfahren bekannt, bei dem Fahrzeuge zur Erhöhung der Sicherheit der Messergebnisse mit einer Radareinrichtung und einer Kameraeinrichtung erfasst werden. Dabei durchfahren sie einen Messbereich der Radareinrichtung (hier objekt-trackender Sensor), die mit einer vorgegebenen Messfrequenz zu mehreren Messzeitpunkten Messdaten zur Geschwindigkeit und zur Position der Fahrzeuge, bezogen auf ein durch die Radareinrichtung definiertes Radar-Koordinatensystem, erfasst.
Die Kameraeinrichtung umfasst wenigstens eine Kamera (hier bild-trackender Sensor) mit einem Matrixsensor, der in Verbindung mit der Kameraachse ein Kamera-Koordinatensystem definiert. Es werden mit einer vorgegebenen Bildfolgefrequenz zu mehreren Aufnahmezeitpunkten Bilder vom Objektfeld der Kamera erzeugt (Bildfolge), aus denen jeweils Bilddaten für ein abgebildetes Fahrzeug abgeleitet werden können, die zusammen über die Aufnahmedauer Bildtrackingdaten darstellen. Die Radareinrichtung und die Kameraeinrichtung sind dabei zueinander so angeordnet und ausgerichtet, dass sich der Messbereich und das Objektfeld wenigstens teilweise überlappen, um einen gemeinsamen Überwachungsbereich zu bilden. Um in Kenntnis der Relativlage des Radar-Koordinatensystems zum Kamera-Koordinatensystem zu gelangen, soll diese vorteilhaft über geeignete Verfahren durch gemeinsam beobachtete Fahrzeuge oder über geeignete Kalibrierungsverfahren angelernt werden können. In Kenntnis der Relativlage der beiden Koordinatensysteme zueinander soll aus den abgeleiteten Bilddaten jeweils die Position der abgebildeten Fahrzeuge ermittelt werden können, die mit den Messdaten der Radareinrichtung auf Korrelation überprüft werden. Gegebenenfalls soll dann aus den Bildtrackingdaten eine Geschwindigkeit berechnet werden können, die mit der Geschwindigkeit, die für das gleiche Fahrzeug aus den Messdaten gewonnen wurde, auf Korrelation überprüft wird. Während ein Fahrzeug durch den gemeinsamen Überwachungsbereich fährt, wird es von der Radareinrichtung wiederholt angemessen. Gleichzeitig wird in die Bilder der aufgezeichneten Bildfolge, die aus einer Folge von Bildern besteht, wobei die Aufnahmezeitpunkte zu den Messzeitpunkten bevorzugt synchronisiert sind, auf das abgebildete Fahrzeug die Geschwindigkeit des Fahrzeuges eingeblendet. Zuvor wurden die Messdaten, die zu einem Messzeitpunkt gleich dem Aufnahmezeitpunkt erhalten wurden, auf Korrelation geprüft.

Sind die Aufnahmezeitpunkte zu den Messzeitpunkten nicht synchronisiert, können über bekannte mathematische Verfahren der Prädiktion und Interpolation Messdaten für jeden beliebigen Zeitpunkt zumindest näherungsweise bestimmt werden, um eine Zuordnung von Messzeitpunkten zu den Aufnahmezeitpunkten zu ermöglichen.

Es wird vorgeschlagen, die miteinander korrelierenden Mess- und Bilddaten miteinander zu fusionieren, womit die Sicherheit der korrekten Zuordnung zum abgebildeten Fahrzeug erhöht wird. Für die Fusionierung sollen bekannte Verfahren der Sensorfusion herangezogen werden.

Leider ist das aus der vorbenannten DE 10 2010 012 811 A1 bekannte Verfahren für eine Anwendung, z. B. in Deutschland, aus datenschutzrechtlichen Restriktionen nicht zulässig, da die Aufzeichnung von Verkehrsabläufen nur unter bestimmten Voraussetzungen erlaubt ist. Nach dem Grundgesetz der Bundesrepublik Deutschland besteht ein Recht auf informelle Selbstbestimmung, wonach der Einzelne bestimmen kann, welche ihn betreffenden Daten an staatliche Stellen gelangen oder dort verwahrt werden dürfen. Eine enge Auslegung verbietet danach das unbegründete und zufällige Abspeichern von persönlichen Daten, was mit der Abspeicherung von Bildern gegeben ist, wenn Fahrzeuge identifizierbar abgebildet sind, die sich konform mit dem Gesetz verhalten.

Der Erfindung liegt die Aufgabe zugrunde, ein Verfahren gemäß der vorbenannten DE 10 2010 012 811 A1 so weiter zu entwickeln, dass es den datenschutzrechtlichen Restriktionen in Ländern wie Deutschland gerecht wird.

Diese Aufgabe wird für ein Verfahren zur Erfassung von Geschwindigkeitsverstößen mit restriktiver Datenspeicherung nach Anspruch 1 gelöst. Dabei fahren Fahrzeuge durch den Messbereich einer mehrzielfähigen Radareinrichtung und wenigstens ein Objektfeld einer Kameraeinrichtung mit wenigsten einer Kamera. Die Radareinrichtung, welche Messdaten liefert, und die Kameraeinrichtung, welche Objektfelddaten liefert, sind zu einer Fahrbahn, auf der die Fahrzeuge fahren und zueinander so angeordnet und ausgerichtet, dass der Messbereich und das wenigstens eine Objektfeld sich wenigstens teilweise überlappen und so einen Überwachungsbereich bilden.
Gleich dem Stand der Technik werden für durch den Überwachungsbereich fahrende Fahrzeuge jeweils aus den Messdaten Objekttrackingdaten und aus den Objektfelddaten Bildtrackingdaten abgeleitet und gespeichert, wobei aus den Objekttrackingdaten jeweils eine dem betreffenden Fahrzeug zugeordnete, gemessene, bestätigte Geschwindigkeit abgeleitet wird und aus den Bildtrackingdaten eine dem betreffenden Fahrzeug zugeordnete, errechnete Geschwindigkeit abgeleitet wird. Die gemessene, bestätigte Geschwindigkeit und die errechnete Geschwindigkeit des betreffenden Fahrzeuges werden dann auf Übereinstimmung überprüft und gegebenenfalls mit einem Grenzwert verglichen. Bei Überschreitung des Grenzwertes wird ein Beweisfoto von dem betreffenden Fahrzeug erstellt.
Es ist erfindungswesentlich, dass aus den Objekttrackingdaten, bevor eine bestätigte Geschwindigkeit mit dem Grenzwert verglichen wird, eine dem betreffenden Fahrzeug zugeordnete, vermutete Geschwindigkeit abgeleitet wird und mit dem Grenzwert verglichen wird und bei Überschreitung des Grenzwertes die Bildtrackingdaten als Bildfolge zwischengespeichert werden, bevor sie nach Feststellung einer Übereinstimmung der gemessenen, bestätigten Geschwindigkeit mit der errechneten Geschwindigkeit und deren Überschreitung des Grenzwertes permanent gespeichert werden.

Auch können vorteilhaft in dem Beweisfoto die Bereiche außerhalb der Abbildung des betreffenden Fahrzeuges unkenntlich gemacht werden. Alternativ können alle Objektfelddaten, die nicht den Bildtrackingdaten zugeordnet werden können, nicht mit der Bildfolge zwischengespeichert werden. Es ist von Vorteil, wenn als Beweisfoto ein Bild der Bildfolge verwendet wird.

Alternativ kann es von Vorteil sein, wenn das Beweisfoto mit einer zusätzlichen Kamera erstellt wird und die Bereiche im Beweisfoto, welche nicht das angemessene Fahrzeug zeigen, unkenntlich gemacht werden. Es können auch mehrere Beweisfotos erstellt werden.

Der Erfindung liegt die Idee zugrunde, einen aus den Messdaten einer Radareinrichtung ableitbaren Anfangsverdacht zu nutzen, um eine Bildfolgeaufzeichnung zu starten und von der Bildfolgeaufzeichnung, aufgrund der Möglichkeit der Zuordnung der Bilddaten zu den Messdaten, nur die Bilddaten des den Anfangsverdacht verursachenden Fahrzeugs unverfälscht abzuspeichern.

Nachfolgend soll das erfindungsgemäße Verfahren anhand eines Ausführungsbeispiels näher erläutert werden.
Hierzu zeigen:
- Fig. 1: eine Prinzipskizze für die Anordnung einer Radareinrichtung und einer Kameraeinrichtung zur Durchführung des Verfahrens,
- Fig. 2a: ein Beweisfoto in fotographischer Darstellung gemäß dem Stand der Technik,
- Fig. 2b: die Aufnahme gemäß Fig. 2a als Zeichnung,
- Fig. 3a: ein Beweisfoto in fotographischer Darstellung und
- Fig. 3b: die Aufnahme gemäß Fig. 3a als Zeichnung.

Zur Durchführung des Verfahrens werden, gleich einem Verfahren der DE 10 2010 012 811 A1, eine Radareinrichtung 1 und eine Kameraeinrichtung 2 mit einer Kamera zu einer Fahrbahn 3 und zueinander so angeordnet, dass oberhalb der Fahrbahn 3 ein von der Radarstrahlung der Radareinrichtung 1 gebildeter Messbereich 1.1 entsteht und das Objektfeld 2.1 der Kamera diesen Messbereich 1.1 wenigstens teilweise überdeckt.

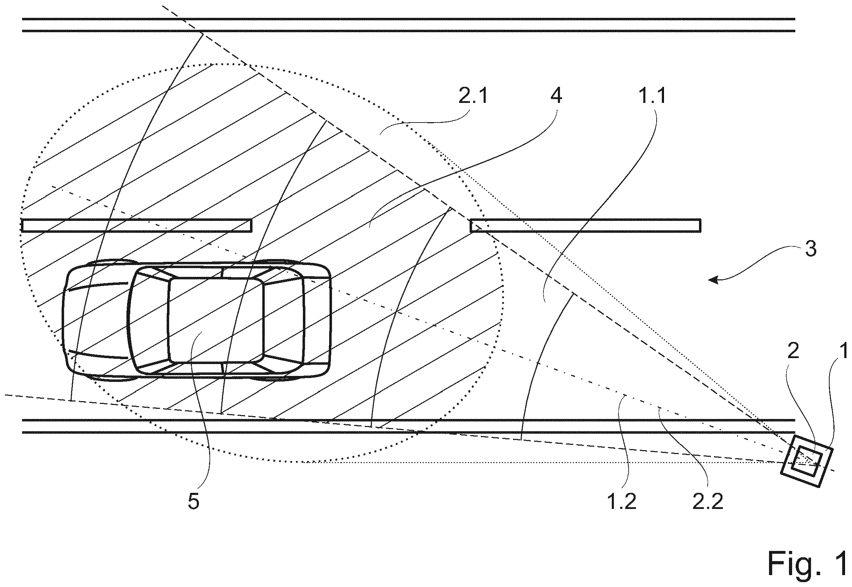

Fig. 1 zeigt einen Abschnitt einer Fahrbahn 3 mit zwei Fahrbahnstreifen und einem darauf fahrenden Fahrzeug 3. Die Radareinrichtung 1 und die Kameraeinrichtung 2 sind hier vorteilhaft übereinander angeordnet, sodass die Radarachse 1.2 und die Kameraachse 2.2 sowohl horizontal als auch vertikal nahezu in eine gleiche Richtung verlaufen. Das Objektfeld 2.1 der Kamera und der Messbereich 1.1 der Radareinrichtung 1 überlappen sich in dem schraffiert dargestellten Bereich, der einen gemeinsamen Überwachungsbereich 4 bildet. Fahrzeuge 5, die durch den Überwachungsbereich 4 fahren, werden durch beide Einrichtungen erfasst.

Wie in der DE 10 2010 012 811 A1 erläutert, können aus den mit der Radareinrichtung 1 gewonnenen Messdaten, über eine Messdauer Objekttrackingdaten extrahiert werden. Objekttrackingdaten sind die fahrzeugspezifischen Messdaten, die jeweils einem der Fahrzeug 5 zugeordnet werden können, aus denen sich jeweils dessen Geschwindigkeit und dessen sich ändernde Position ableiten lässt. Es bedarf mehrere Einzelmessungen, das heißt ein Anmessen des Fahrzeuges 5 über eine gewisse Messdauer, ehe aus den Messdaten ein Model für das Fahrzeug 5 entwickelt werden kann und diesem Model, welches für das Fahrzeug 5 steht, eine gemessene Geschwindigkeit zugeordnet werden kann. Mit dem Moment der möglichen Zuordnung gilt die Geschwindigkeit noch nicht als sicher bestätigt, sondern als vermutete Geschwindigkeit. Es bedarf weiterer Einzelmessungen in denen sich die vermutete Geschwindigkeit und deren Zuordnung bestätigen muss, um als bestätigte, bzw. verifizierte Geschwindigkeit zu gelten.

Aus den Objektfelddaten eines Bildes können den Abbildungen einzelner Fahrzeuge 5 Bilddaten zugeordnet werden. Die einer Abbildung zugeordneten Bilddaten mehrerer Aufnahmen werden als Bildtrackingdaten zusammengefasst. Die Zuordnung von Bilddaten zu einer Abbildung eines Fahrzeuges 5, und damit die Bestimmung dessen Position im Bild, ist zwar bereits mit einem einzigen Bild möglich, jedoch erst aus der sich ändernden Position der Abbildung in aufeinanderfolgend erstellten Bildern, kann die Geschwindigkeit der Positionsänderung der Abbildung des Fahrzeuges 5 berechnet werden. Letzteres lässt sich mit einer höheren Genauigkeit erfassen, wenn statt nur einer Kamera zwei Kameras verwendet werden, die als Stereokamera zusammen wirken und ein dreidimensionales Tiefenbild liefern.

### Das Verfahren läuft wie folgt ab:

Mit der Einfahrt eines Fahrzeuges 5 in den Messbereich 1.1 der Radareinrichtung 1 werden Messdaten generiert aus denen für das betreffende Fahrzeug 5 spezifische Objekttrackingdaten extrahiert werden, aus denen auch für das Fahrzeug 5 eine vermutete Geschwindigkeit abgeleitet wird. Noch bevor deren Richtigkeit durch wiederholtes Erfassen als bestätigte Geschwindigkeit gelten kann, wird diese vermutete Geschwindigkeit mit einem Grenzwert verglichen. Ergibt sich dabei, dass die vermutete Geschwindigkeit oberhalb des Grenzwertes liegt, also ein Anfangsverdacht vorliegt, wird die Kameraeinrichtung 2, die permanent aktiviert ist und Bilder erstellt, so angesteuert, dass die nächsten Bilder eine Bildfolge bildend, in einem internen Speicher der Kameraeinrichtung 2 zwischengespeichert werden. Während die Bildfolge zwischengespeichert wird, werden weiter aus den Messdaten Objekttrackingdaten extrahiert, bis die daraus abgeleitete Geschwindigkeit als bestätigt gilt. Diese wird wieder mit dem Grenzwert verglichen und bei Feststellung, dass diese oberhalb des Grenzwertes liegt, wird ein Beweisfoto erstellt und die zwischengespeicherte Bildfolge wird dauerhaft abgespeichert. Vorteilhaft werden die Objekttrackingdaten und die Bildtrackingdaten fusioniert gespeichert. Objektfelddaten die keine Bildtrackingdaten sind werden entweder nicht mit zwischengespeichert oder wenn sie mit zwischengespeichert wurden, werden sie unkenntlich gemacht bzw. vor dem permanenten Abspeichern der Bildfolge gelöscht.

Die Zwischenspeicherung einer Bildfolge kann auch bereits dann gestartet werden, wenn eine vermutete Geschwindigkeit aus den Messdaten abgeleitet werden kann, bevor diese sicher einem Fahrzeug 5 zugeordnet werden kann. Das heißt, es liegen die Objekttrackingdaten zwar zwangsläufig vor, da sie Bestandteil der Messdaten sind, sie erlauben jedoch noch keine sichere Zuordnung zu einem bestimmten Fahrzeug 5. Gegebenfalls müssen dann alle Bilddaten der Bildfolge zwischengespeichert werden.
Sobald die Objekttrackingdaten, denen diese vermutete Geschwindigkeit angehört, einem Fahrzeug 5 zugeordnet werden können, können auch aus den Bilddaten der zwischengespeicherten Bildfolge die Bildtrackingdaten extrahiert werden, die zur Abbildung dieses dann als angemessenes Fahrzeug 5 identifizierten Fahrzeuges 5 gehören. Dann ist es möglich, alle anderen Bilddaten unbrauchbar zu machen.

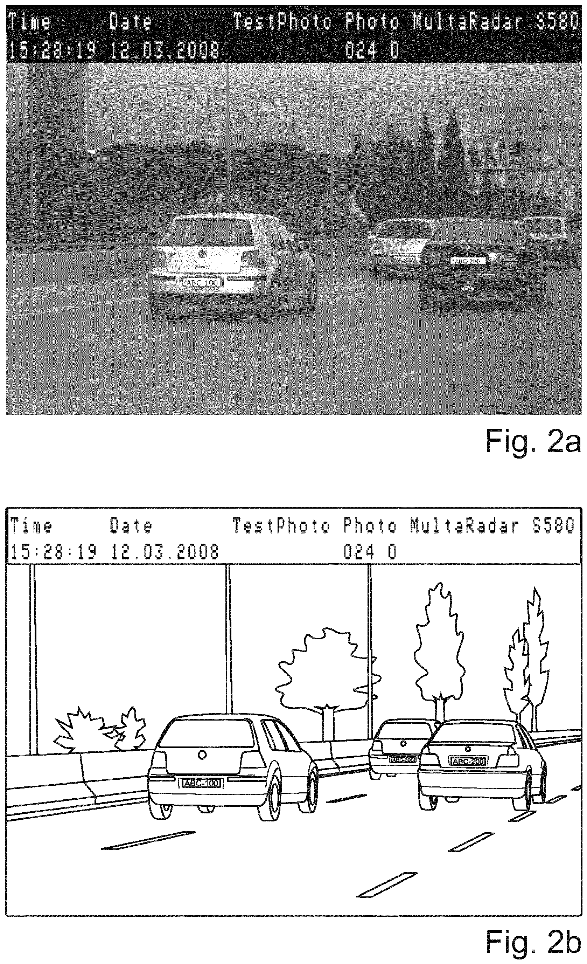

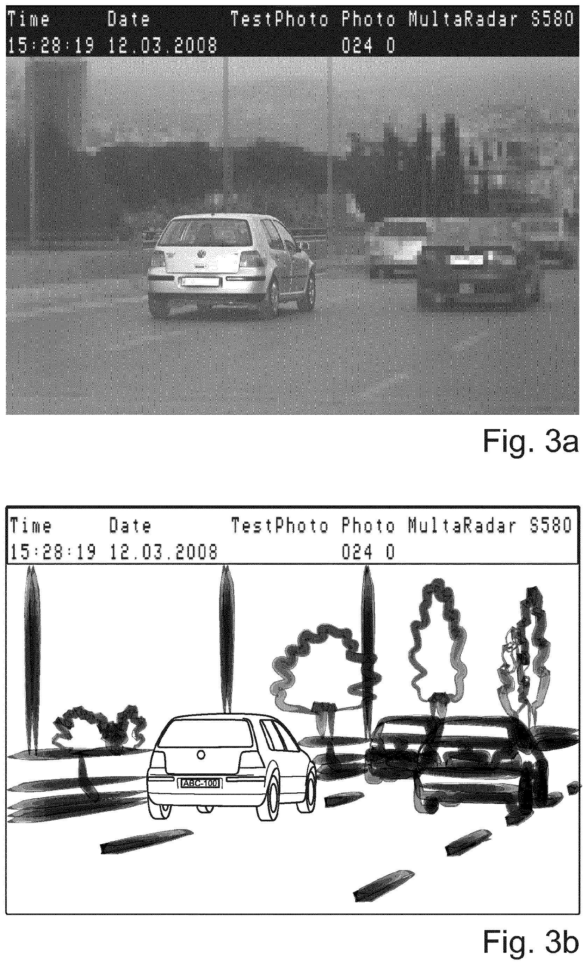

Mögliche Methoden zur Unkenntlichmachung sind beispielsweise extreme Tiefpassfilterung der Objektfelddaten, die keine Bildtrackingdaten sind oder Verpixelung der Bereiche außerhalb der Abbildung des angemessenen Fahrzeugs 5, wie in den Fig. 3a und 3b gezeigt. Hierzu ist ein gleiches Bild gemäß dem Stand der Technik in den Fig. 2a und 2b gezeigt.

Sobald mit den Objekttrackingdaten des angemessenen Fahrzeuges 5 eine als bestätigt geltende Geschwindigkeit oberhalb der Grenzgeschwindigkeit vorliegt, wird bei Erreichen einer Fotolinie ein Beweisfoto ausgelöst. Im Nachgang werden dann aus dem Bildspeicher der Kameraeinrichtung 2 die Bildtrackingdaten dieses angemessenen Fahrzeuges 5 heruntergeladen und vergleichbar, wie in der DE 10 2010 012 811 A1 offenbart, durch bekannte Verfahren der optischen Flussanalyse und/oder Tiefenschätzung (bei Stereoaufnahmen) analysiert bzw. berechnet. Die Analyse liefert eine Schätzgeschwindigkeit bzw. berechnete Geschwindigkeit für das abgebildete Fahrzeug 5 und ggf. weitere photogrammetrische Informationen (Größe des Kennzeichenausschnittes im Bild), aus denen ein Rückschluss auf die Fahrzeugposition vorgenommen werden. Die so ermittelte Schätzgeschwindigkeit bzw. berechnete Geschwindigkeit wird mit der Messgeschwindigkeit verglichen. Liefert der Vergleich ein positives Ergebnis, wird die Messung als endgültig validiert angesehen. Anderenfalls wird die Messung verworfen oder alternativ manuell überprüft.

### Bezugszeichenliste

- 1: Radareinrichtung
- 1.1: Messbereich
- 1.2: Radarachse
- 2: Kameraeinrichtung
- 2.1: Objektfeld
- 2.2: Kameraachse
- 3: Fahrbahn
- 4: Überwachungsbereich
- 5: Fahrzeug

## Patentansprüche

1. Verfahren zur Erfassung von Geschwindigkeitsverstößen mit restriktiver Datenspeicherung, bei dem
Fahrzeuge (5) durch den Messbereich (1.1) einer mehrzielfähigen Radareinrichtung (1) und wenigstens ein Objektfeld (2.1) einer Kameraeinrichtung (2) mit wenigsten einer Kamera fahren, wobei die Radareinrichtung (1), welche Messdaten liefert, und die Kameraeinrichtung (2), welche Objektfelddaten liefert, zu einer Fahrbahn (3) und zueinander so angeordnet und ausgerichtet sind, dass der Messbereich (1.1) und das wenigstens eine Objektfeld (2.1) sich wenigstens teilweise überlappend, einen Überwachungsbereich (4) bilden,
von einem den Überwachungsbereich (4) durchfahrenden Fahrzeug (5) aus den Messdaten Objekttrackingdaten und aus den Objektfelddaten wenigstens Bildtrackingdaten, die einer Abbildung eines einzelnen Fahrzeuges (5) zugeordnete Bilddaten mehrerer Aufnahmen umfassen, abgeleitet und gespeichert werden, wobei aus den Objekttrackingdaten eine dem betreffenden Fahrzeug (5) zugeordnete, gemessene, bestätigte Geschwindigkeit abgeleitet wird und aus den Bildtrackingdaten eine dem betreffenden Fahrzeug (5) zugeordnete, errechnete Geschwindigkeit abgeleitet wird,
die gemessene, bestätigte Geschwindigkeit und die errechnete Geschwindigkeit auf Übereinstimmung überprüft werden,
gegebenenfalls mit einem Grenzwert verglichen werden und
bei Überschreitung des Grenzwertes ein Beweisfoto von dem betreffenden Fahrzeug (5) erstellt wird, **dadurch gekennzeichnet,**
**dass** aus den Objekttrackingdaten, bevor eine bestätigte Geschwindigkeit mit dem Grenzwert verglichen wird, eine dem betreffenden Fahrzeug (5) zugeordnete, vermutete Geschwindigkeit abgeleitet und mit dem Grenzwert verglichen wird und bei Überschreitung des Grenzwertes die Bildtrackingdaten als Bildfolge zwischengespeichert werden, bevor von den Objektfelddaten nach Feststellung einer Übereinstimmung der gemessenen, bestätigten Geschwindigkeit mit der errechneten Geschwindigkeit und deren Überschreitung des Grenzwertes ausschließlich die Bildtrackingdaten permanent gespeichert werden

2. Verfahren nach Anspruch 1, **dadurch gekennzeichnet,**
**dass** in dem Beweisfoto die Bereiche außerhalb der Abbildung des betreffenden Fahrzeuges (5) unkenntlich gemacht werden.

3. Verfahren nach Anspruch 1, **dadurch gekennzeichnet,**
**dass** alle Objektfelddaten, die nicht den Bildtrackingdaten zugeordnet werden können, nicht mit der Bildfolge zwischengespeichert werden.

4. Verfahren nach Anspruch 2 oder Anspruch 3, **dadurch gekennzeichnet,**
**dass** als Beweisfoto ein Bild der Bildfolge verwendet wird.

5. Verfahren nach Anspruch 1, **dadurch gekennzeichnet,**
**dass** das Beweisfoto mit einer zusätzlichen Kamera erstellt wird und die Bereiche im Beweisfoto, welche nicht das angemessene Fahrzeug (5) zeigen unkenntlich gemacht werden.

## Claims

1. A method for detecting speeding offences with restrictive data storage, wherein vehicles (5) drive through the measurement range (1.1) of a multi-target radar device (1) and at least one object field (2.1) of a camera device (2) comprising at least one camera, wherein the radar device (1), which provides measurement data, and the camera device (2), which provides object field data, are arranged and aligned with respect to a roadway (3) and to each other such that the measurement range (1.1) and the at least one object field (2.1), overlapping at least partly, constitute a surveillance area (4),
object tracking data based on the measurement data, and at least image tracking data based on the object field data and comprising image data of several pictures assigned to the image of one single vehicle (5), are derived and stored for a vehicle (5) driving through the surveillance area (4),
wherein a measured, confirmed speed assigned to the vehicle (5) concerned is derived from the object tracking data and a computed speed assigned to the vehicle (5) concerned is derived from the image tracking data,
the measured, confirmed speed and the computed speed are checked to determine if they correspond to each other, are optionally compared to a limit and, if the limit is exceeded, an evidentiary photograph of the vehicle (5) concerned is produced, **characterised in that**
prior to comparing a confirmed speed with the limit, an assumed speed assigned to the vehicle (5) concerned is derived from the object tracking data and compared with the limit, and if the limit is exceeded, the image tracking data are temporarily stored as an image sequence, before only the image tracking data among the object field data are permanently stored upon determining that the measured, confirmed speed corresponds to the computed speed and exceeds the limit.

2. The method according to claim 1, **characterised in that** the areas outside the image of the vehicle (5) concerned in the evidentiary photograph are rendered unrecognisable.

3. The method according to claim 1, **characterised in that** any object field data which cannot be assigned to the image tracking data are not temporarily stored with the image sequence.

4. The method according to claim 2 or 3, **characterised in that** an image of the image sequence is used as evidentiary photograph.

5. The method according to claim 1, **characterised in that** the evidentiary photograph is taken by an additional camera and the areas in the evidentiary photograph which do not show the measured vehicle (5) are rendered unrecognisable.

## Revendications

1. Procédé de détection d'excès de vitesse avec un stockage de données restrictif, dans lequel
des véhicules (5) traversent la zone de mesure (1.1) d'un dispositif radar (1) multi-cibles et au moins un champ objet (2.1) d'un dispositif de caméra (2) comportant au moins une caméra, le dispositif radar (1), qui fournit des données de mesure, et le dispositif de caméra (2), qui fournit des données de champ objet, étant disposés et orientés par rapport à une voie routière (3) et l'un par rapport à l'autre de sorte que la zone de mesure (1.1) et ledit au moins un champ objet (2.1), se chevauchant au moins partiellement, constituent une zone de surveillance (4), des données de suivi d'objet à partir des données de mesure et au moins des données de suivi d'image à partir des données de champ objet sont dérivées et stockées pour un véhicule (5) traversant la zone de surveillance (4), les données de suivi d'image comportant des données d'image de plusieurs photographies attribuées à un image d'un seul véhicule (5),
une vitesse mesurée et confirmée, attribuée au véhicule concerné (5), étant dérivée à partir des données de suivi d'objet et une vitesse calculée, attribuée au véhicule concerné (5), étant dérivée à partir des données de suivi d'image,
on vérifie si la vitesse mesurée et confirmée et la vitesse calculée sont identiques, comparant lesdites vitesses avec une limite, le cas échéant, et produisant une photo d'évidence du véhicule concerné (5) lors d'un excès de la limite, **caractérisé en ce que**
avant de comparer une vitesse confirmée avec la limite, une vitesse supposée, attribuée au véhicule concerné (5), est dérivée à partir des données de suivi d'objet et comparée avec la limite, et si on constate un excès de la limite, les données de suivi d'image sont stockées temporairement sous forme d'une séquence d'images, avant de stocker en permanence seulement les données de suivi d'image parmi les données de champ objet, après avoir constaté que la vitesse mesurée et confirmée et la vitesse calculée sont identiques et excèdent la limite.

2. Procédé selon la revendication 1, **caractérisé en ce que** les régions en dehors de l'image du véhicule concerné (5) sont rendues non identifiables dans la photo d'évidence.

3. Procédé selon la revendication 1, **caractérisé en ce que** les données de champ objet que l'on ne peut pas attribuer aux données de suivi d'image ne sont pas stockées temporairement avec la séquence d'images.

4. Procédé selon la revendication 2 ou 3, **caractérisé en ce que** l'on utilise comme photo d'évidence un image de la séquence d'images.

5. Procédé selon la revendication 1, **caractérisé en ce que** la photo d'évidence est produite par une caméra additionnelle et les régions dans ladite photo d'évidence qui ne montrent pas le véhicule mesuré (5) sont rendues non identifiables.
